(19) **Europäisches Patentamt**
European Patent Office
Office européen des brevets

(11) **EP 1 354 236 B1**

(12) **EUROPÄISCHE PATENTSCHRIFT**

(45) Veröffentlichungstag und Bekanntmachung des Hinweises auf die Patenterteilung:
**24.09.2008 Patentblatt 2008/39**

(21) Anmeldenummer: **02701225.1**

(22) Anmeldetag: **24.01.2002**

(51) Int Cl.:
*G02C 7/02* *(2006.01)*

(86) Internationale Anmeldenummer:
**PCT/DE2002/000237**

(87) Internationale Veröffentlichungsnummer:
**WO 2002/059682 (01.08.2002 Gazette 2002/31)**

(54) **VERFAHREN ZUR HERSTELLUNG EINES BRILLENGLASES**

METHOD FOR MANUFACTURING AN EYEGLASS LENS

PROCEDE DE FABRICATION D'UN VERRE DE LUNETTES

(84) Benannte Vertragsstaaten:
**DE ES FR GB IT**

(30) Priorität: **24.01.2001 DE 10103113**

(43) Veröffentlichungstag der Anmeldung:
**22.10.2003 Patentblatt 2003/43**

(73) Patentinhaber: **Rodenstock GmbH**
**80469 München (DE)**

(72) Erfinder:
• **FENDT, Roswitha**
**85521 Ottobrunn (DE)**
• **GRUNA, Fritz**
**84453 Mühldorf (DE)**
• **ALTHEIMER, Helmut**
**87650 Lauchdorf (DE)**
• **HAIMERL, Walter**
**80337 München (DE)**
• **ESSER, Gregor**
**81735 München (DE)**
• **PFEIFFER, Herbert**
**81247 München (DE)**

(74) Vertreter: **Müller-Boré & Partner**
**Patentanwälte**
**Grafinger Strasse 2**
**81671 München (DE)**

(56) Entgegenhaltungen:
**EP-A- 0 359 084          DE-A- 4 337 369**
**JP-A- 10 175 149**

• **PATENT ABSTRACTS OF JAPAN vol. 013, no. 281 (M-842), 27. Juni 1989 (1989-06-27) & JP 01 075149 A (FURUKAWA ELECTRIC CO LTD:THE; OTHERS: 01), 20. März 1989 (1989-03-20) in der Anmeldung erwähnt**

**Beschreibung**

**Technisches Gebiet**

Die Erfindung bezieht sich auf ein Verfahren zur Herstellung eines Brillenglases gemäß dem Oberbegriff des Patentanspruchs 1.

**Stand der Technik**

Von wenigen Ausnahmen - z.B. Direktgießen eines beidseitig fertigen Brillenglases - abgesehen erfolgt die Herstellung eines Brillenglases zur Korrektur von Augenfehlern derzeit wie folgt:

Zunächst wird ein einseitig fertiges, ungerandetes, beispielsweise rohrundes Brillenglas hergestellt. Ein derartiges Brillenglas, das lediglich eine fertige optische Fläche, die im folgenden als Basisfläche bezeichnet wird, und eine noch nicht fertig gestellte zweite Fläche aufweist, wird auch als Blank bezeichnet (vgl. ISO-Norm 10322). Dieser Blank, der ein - im Handel erhältliches - Halbfertigprodukt darstellt, wird entweder "auf Lager" oder kurzfristig aufgrund einer konkreten Bestellung gefertigt oder vom Hersteller der rezeptoptimierten Fläche von einem Dritthersteller zugekauft. Gerade der Zukauf ist bei der sogenannten dezentralen Fertigung unter Einschaltung von Rezeptglasbetrieben nicht selten.

Sobald eine konkrete Bestellung aufgrund eines Brillenrezeptes beim Hersteller der rezeptoptimierten Fläche eingeht, wird entsprechend den Daten des jeweiligen Brillenrezepts eine rezeptoptimierte Fläche berechnet bzw. eine "passende" Rezeptfläche aus vorhandenen, zuvor berechneten Rezeptflächen ausgewählt. Diese Rezeptfläche wird dann entsprechend den berechneten bzw. ausgewählten, zuvor berechneten Daten gefertigt.

Da die Fertigungsvorrichtungen der sogenannten "Rezeptglas-Fertigungsbetriebe" auf die Bearbeitung von konkaven und damit der augenseitigen Flächen eingerichtet sind, wird in der Regel als Basisfläche die Vorderfläche gewählt. Die rezeptoptimierte Fläche bzw. die ausgewählte Rezeptfläche ist somit (in der Regel) die konkave augenseitige Fläche.

Bis vor kurzem ist in der Praxis überwiegend als Basisfläche die komplizierter herzustellende Fläche, also bei einem progressiven Brillenglas die progressive Fläche oder bei einem Einstärkenbrillenglas mit astigmatischer Wirkung die torische bzw. atorische Fläche gewählt worden.

Im Falle progressiver Brillengläser sind beispielsweise einige 10 bis zu mehr als 100 unterschiedliche progressive Vorderflächen, die sich durch den Flächenbrechwert im Fernbezugspunkt (Basiskurve) und die Addition (Zunahme der Wirkung vom Fernteil zum Nahteil) unterscheiden, (vorab, d.h. unabhängig von einer individuellen Gebrauchstellung) berechnet und (auf Lager) als Blanks gefertigt worden. Zur Anpassung der Blanks an ein vorliegendes Brillenrezept ist dann auf das mit der progressiven Vorderfläche versehene einseitig fertige Brillenglas eine konkave augenseitige Fläche aufgebracht worden. Die Wahl der augenseitigen Fläche ist dabei so vorgenommen worden, dass durch die sphärischen Flächenbrechwerte der Vorderfläche und der augenseitigen Fläche (Rezeptfläche) die durch das Brillenrezept vorgegebene sphärische Wirkung erzielt worden ist. Im Falle einer zusätzlichen astigmatischen Wirkung ist als Rezeptfläche anstelle einer sphärischen oder asphärischen augenseitigen Fläche eine torische oder atorische Fläche gefertigt worden, deren Zylinderwirkung und Achslage den jeweiligen Rezeptwerten entsprochen hat.

Ferner ist es bekannt, eine als progressive Fläche ausgebildete Basisfläche, bei der es sich ebenfalls um die Vorderfläche handelt, mit einer asphärischen oder atorischen augenseitigen Fläche zu kombinieren, die für die jeweilige Gebrauchssituation, d. h. für die individuellen Bedingungen eines speziellen Brillenträgers eigens berechnet worden ist. Hierzu wird auf die DE 42 10 008 A1, die DE 195 11 613 A1 oder die von den Optischen Werken G. Rodenstock, München, DE unter der Bezeichnung "Multigressiv (II)" hergestellten und offenkundig vorbenutzten Brillengläser verwiesen.

In der Patentliteratur ist allerdings bereits seit längerem vorgeschlagen worden, als rezeptoptimierte Fläche die komplizierter herzustellende Fläche zu wählen, also beispielsweise eine progressive Fläche, und diese z. B. derart zu gestalten, dass sie zusätzlich auch eine astigmatische Wirkung entsprechend dem jeweiligen Brillenrezept hat. Hierzu wird auf die US-PS 2 878 721 oder die DE 43 37 369 A1 verwiesen. Ein ähnlicher Vorschlag wie in den beiden vorgenannten Druckschriften ist auch in der DE 197 01 312 A1 sowie weiteren Patentanmeldungen enthalten. Die als Basisfläche dienende Vorderfläche ist gemäß diesen Anmeldungen eine rotationssymmetrische und insbesondere eine sphärische Fläche.

Seit Mai 2000 wird ein auf der DE 43 37 369 A1 basierendes Brillenglas unter der Handelsbezeichnung "Impression" bzw. "ILT" von den Optischen Werken G. Rodenstock, München, DE hergestellt und vertrieben: bei diesem Brillenglas ist die rezeptoptimierte Fläche die augenseitige, progressiv ausgebildete Fläche, die entsprechend den Rezeptwerten sowie den individuellen Daten (Pupillenabstand, Hornhaut/Scheitel-Abstand, Vorneigung sowie weiteren individuellen Daten) des jeweiligen Brillenträgers sowie gegebenenfalls der gewählten Brillenfassung berechnet worden ist. Als Basisfläche wird eine sphärische, asphärische oder atorische Vorderfläche verwendet, wobei der Atorus (in der Regel) nur zur ästhetischen Anpassung der Vorderfläche an die Form der Gläserringe der gewählten Brillenfassung und nicht zur Korrektur eines eventuellen Astigmatismus des Auges dient.

Von diesem Brillenglas bzw. dem zur Herstellung dieses Brillenglases angewandten Verfahren wird bei der Formulierung des Oberbegriffs des Patentanspruchs 1 ausgegangen.

Auf die vorgenannten Druckschriften und offenkundig vorbenutzten Brillengläser wird im übrigen zur Erläuterung aller hier nicht näher beschriebenen Einzelheiten ausdrücklich Bezug genommen.

Nun ist die Fertigung von Brillengläsern - wie jede Fertigung - mit Fertigungsfehlern behaftet. Bei der Herstellung von rotationssymmetrischen (Einstärken)-Brillenglasflächen, torischen oder progressiven Flächen fertigen die Hersteller von Blanks die jeweils fertige Fläche des Blanks in der Regel aber nicht mit der höchstmöglichen Genauigkeit, wie sie beispielsweise bei Linsen für präzisionsoptische Systeme, wie Fotoobjektive, üblich ist, sondern aus Kostengründen (nur) mit einer deutlich geringeren Genauigkeit. Die bei im Handel erhältlichen Halbfertigprodukten auftretenden Abweichungen beim Flächenbrechwert und beim Flächenastigmatismus liegen - wie erfindungsgemäß festgestellt worden ist - häufig sogar über den Werten, wie sie gemäß der ISO-Norm 10322 zulässig sind:

Gemäß ISO 10322 betragen bei Einstärken-Brillengläser mit sphärischen Flächen und einem Flächenbrechwert im Scheitel zwischen 2 und 10 dpt die maximale sphärische Abweichung vom Scheitelbrechwert sowie der maximale Flächenastigmatismus in jedem Punkt der Fläche bis zu $\pm 0{,}06$ dpt. Bei progressiven Flächen können die sphärischen und astigmatischen Abweichungen von den Vorgabewerten sogar noch größer sein. Bei Blanks gerade aus hochbrechendem Kunststoffmaterial stellt man aufgrund von Verzugserscheinungen oder dgl. in der Peripherie Flächenastigmatismuswerte von bis zu 0,25 dpt fest, wobei das Auftreten von Verzugserscheinungen und der resultierende Flächenastigmatismus statistischen Schwankungen unterworfen sind.

Eine ähnliche Vorgehensweise ist für Kontaktlinsen in der US-PS 4,980,993 beschrieben.

In keiner der beiden vorgenannten Druckschriften sind jedoch Brillengläser beschrieben, bei denen die rezeptoptimierte Fläche individuell für die jeweiligen Daten des Brillenträgers berechnet wird, und die Berechnung aufgrund der Messungen modifiziert wird. Diese beiden Druckschriften beschreiben damit andere Verfahren wie im Oberbegriff des Patentanspruchs 1 vorausgesetzt.

## Darstellung der Erfindung

Erfindungsgemäß ist erkannt worden, dass bereits die typischerweise auftretenden, scheinbar geringen Abweichungen von Brillenglas-Flächen von den Vorgabewerten keinesfalls zu vernachlässigen sind, sondern einen nicht unerheblichen Einfluß z. B. auf den sogenannten Visus haben können. Erst recht ist dies natürlich der Fall, wenn die tatsächlichen Abweichungen größer als die gemäß ISO 10322 zulässigen Abweichungen sind und Werte von 0,25 dpt und sogar darüber erreichen.

Mit "Visus" wird der Kehrwert der angularen Sehschärfe bezeichnet; die angulare Sehschärfe ist der kleinste Winkel, den das Auge auflösen kann. Der Visus stellt damit ein Maß für das erzielte Sehvermögen des Brillenträgers aufgrund des Systems "Brillenglas/Auge" dar. Bezüglich des Zusammenhangs zwischen dem Wert des Visus und Eigenschaften des Brillenglases wird auf den "Forschungsbericht Visus" des Institutes für medizinische Optik der Universität München verwiesen, auf den im übrigen zur Erläuterung des hier verwendeten Begriffs "Visus" und aller anderen Einzelheiten ausdrücklich Bezug genommen wird.

EP-A-0 359 084 offenbart ein Verfahren zum Herstellen von im wesentlichen sphärischen Kontaktlinsen wobei nach Erstellen einer ersten gekrümmten Fläche einer Kontaktlinse ein Krümmungsradius der Kontaktlinse gemessen wird. Abweichungen des gemessenen tatsächlichen Krümmungsradius vom theoretisch gewünschten Wert werden bei der Anfertigung der zweiten Fläche des Kontaktlinse berücksichtigt.

JP 10175149 A offenbart ein Verfahren zum Herstellen von Brillengläsern basierend auf halbfertigen Linsen, wobei zwischen sphärischen Linsen und progressiven Linsen unterschieden wird. Zur Herstellung von sphärischen Linsen wird der tatsächliche Krümmungsradius einer sphärischen halbfertigen Linse gemessen, mit dem theoretischen Wert verglichen und die Abweichung bei der Berechnung der zweiten Fläche berücksichtigt.

Es ist eine Aufgabe der Erfindung, ein Verfahren zur Herstellung von Brillengläsern unter Verwendung von einseitig gefertigten Brillengläsern mit im wesentlichen sphärischer Basisfläche als bereits gefertigter Fläche des halbfertigen Brillenglases zu verbessern.

Diese Aufgabe wird durch das Verfahren mit den im Anspruch angegebenen Merkmalen gelöst. Bevorzugte Ausführungsformen sind Gegenstand der abhängigen Ansprüche.

Vorteilhafterweise wird anhand des Verfahrens zur Herstellung eines Brillenglases, bei dem zunächst ein einseitig fertiges, ungerandetes Brillenglas hergestellt wird, anschließend entsprechend den Daten eines Brillenrezepts die rezeptoptimierte Fläche berechnet, und dann die rezeptoptimierte Fläche entsprechend den berechneten Daten gefertigt wird, der Visus, der sich aufgrund des fertigen Brillenglases für das System Brillenglas/Auge ergibt, nicht durch fertigungsbedingte Eigenschaften der Basisfläche verschlechtert.

Erfindungsgemäß ist erkannt worden, dass sogar die "scheinbar" kleinen Fertigungsfehler, wie sie nach dem Stand der Technik bei sphärischen oder einfach torischen Vorderflächen von einseitig fertigen Brillengläser auftreten, einen unerwartet großen Einfluss auf den Visus insbesondere dann haben, wenn die rezeptoptimierte Fläche eine individuell berechnete progressive Fläche ist. Gerade bei gegossenen Blanks können diese Fertigungsfehler die Vorteile der individuellen Berechnung für den Visus wieder zunichte machen.

Erfindungsgemäß wird deshalb ein gattungsgemäßes Verfahren derart weitergebildet, dass nach der Herstellung des einseitig fertigen Brillenglases die Basisfläche vermessen wird. Die rezeptoptimierte Fläche wird nicht nur unter Berücksichtigung der Daten des Brillenrezepts, sondern auch unter Berücksichtigung der tatsächlichen Form der Basisfläche, d. h. insbesondere der Abweichung der'IST-Werte der Basisfläche von den theoretischen SOLL-Werten berechnet - also nicht unter vorgegebenen Flächen ausgewählt - und gefertigt. Durch diese Vorgehensweise erhält man auch dann, wenn die tatsächlich beim Blank vorhandene Basisfläche gravierend von der (vorausgesetzten) theoretischen Basisfläche abweicht, aufgrund der -entsprechend den realen Abweichungen - geänderten rezeptoptimierten Fläche einen tatsächlichen Verlauf der Linien gleichen Visus, wie er theoretisch bei der Berechnung der Fläche mit den theoretischen Werten der Basisfläche erhalten wird.

Das erfindungsgemäße Verfahren ist insbesondere dann von Vorteil, wenn die rezeptoptimierte Fläche nicht nur unter Berücksichtigung der grundlegenden optischen Daten des Brillenträgers (sphärische Wirkung, Astigmatismus, Achslage des Astigmatismus), sondern auch unter Berücksichtigung der individuellen Daten (Pupillenabstand, Hornhaut/ Scheitel-Abstand, Vorneigung usw.) sowie gegebenenfalls der Form der Gläserringe der gewählten Fassung berechnet wird. In diesem Falle ist in jedem Falle für die Fertigung eines jeden Brillenglases eine Neuberechnung der rezeptoptimierten Fläche erforderlich, so dass der zusätzliche Aufwand für die Herstellung des erfindungsgemäßen Brillenglases sich auf die Vermessung der Basisfläche beschränkt.

Diese Vorgehensweise ist kostengünstiger als die Fertigung der Basisfläche mit entsprechend höherer Genauigkeit als derzeit in der Brillenoptik üblich.

Prinzipiell sind folgende Kombinationen von Basisfläche und rezeptoptimierter Fläche möglich:

### PROGRESSIVGLÄSER

|  | Basisfläche | Rezeptoptimierte Fläche |
|---|---|---|
| 1. | Progressive Fläche | Rotationssymmetrische Asphäre bzw. Atorus |
| 2. | Sphäre | Progressiv-atorisch |
| 3. | Torus | Progressiv-atorisch |
| 4. | Progressive Fläche | Progressiv-atorisch |

Unter einer progressiven Fläche wird im Rahmen der vorliegenden Anmeldung eine asphärische Fläche verstanden, die einen merklichen Beitrag zum Brechwertanstieg des Brillenglases leistet. Unter einer atorischen Fläche wird eine asphärische Fläche mit einer, zwei oder keiner Symmetrieebene verstanden, die keinen merklichen Beitrag zum Brechwertanstieg des ganzen Brillenglases leistet, und häufig, jedoch nicht notwendigerweise einen Beitrag zur Korrektur eines Augenastigmatismus liefert. Unter einer progressiv-atorischen Fläche ist eine Fläche zu verstehen, die bei astigmatischen Verordnungen sowohl einen wesentlichen Beitrag zum Brechwertanstieg liefert als auch zur astigmatischen Wirkung des Brillenglases beiträgt. Im Falle einer sphärischen Verordnung entspricht die progressiv-atorische Fläche im Prinzip einer progressiven Fläche, es werden aber auf jeden Fall bei der Berechnung der progressiven Fläche alle möglichen Parameter wie z.B. Hornhautscheitelabstand, Pupillendistanz usw. berücksichtigt.

### EINSTÄRKENGLÄSER

|  | Basisfläche | Rezeptoptimierte Fläche |
|---|---|---|
| 1. | Rotationssymmetrische Asphäre bzw. Atorus | Rotationssymmetrische Asphäre bzw. Atorus |
| 2. | Sphäre | Rotationssymmetrische Asphäre bzw. Atorus |
| 3. | Torus | Rotationssymmetrische Asphäre bzw. Atorus |

Das erfindungsgemäße Verfahren ist jedoch besonders bevorzugt für Brillengläser, bei denen die rezeptoptimierte Fläche eine progressive Fläche ist, d. h. eine Fläche, deren Wirkung in Gebrauchsstellung sich zwischen wenigstens zwei Bereichen ändert. Erfindungsgemäß ist festgestellt worden, dass bei derartigen Flächen bereits kleine Abweichungen der tatsächlich vorliegenden Basisfläche von der bei der Berechnung der progressiven Fläche vorausgesetzten idealen Basisfläche zu einer beträchtlichen Verringerung des Visus führen. Dies gilt insbesondere dann, wenn die progressive Fläche auch eine eventuelle, gemäß dem individuellen Brillenrezept erforderliche astigmatische Wirkung aufbringt; in diesem Falle wird die progressive Fläche in der Regel bei Vorliegen einer konkreten Bestellung "on demand" berechnet, so dass sich - wie bereits ausgeführt - der zusätzliche Aufwand auf die Vermessung der (häufig, aber keineswegs zwingend notwendig) sphärischen Basisfläche beschränkt.

Selbstverständlich ist es aber auch möglich, dass die rezeptoptimierte Fläche eine atorische Fläche mit zwei, einer oder keiner Symmetrieachse bzw. -ebene ist. In vielen Fällen wird jedoch auch dann die Basisfläche eine zumindest annähernd sphärische oder rotationssymmetrisch asphärische Form haben.

Erfindungsgemäß wird die Basisfläche, die entweder auf Lager liegt, vorab gefertigt wird oder auch hinzu gekauft werden kann, bereitgestellt und vermessen. Die Vermessung kann dabei entweder punktuell in den Bezugspunkten erfolgen oder flächenhaft, wobei die letzere Methode bevorzugt ist. Gerade bei Blanks, die durch Gießen hergestellt worden sind, können insbesondere peripher lokale Abweichungen von den Soll-Daten durch Verzüge auftreten, die durch eine Messung von Scheitelwerten bzw. durch eine Messung in den Bezugspunkten nicht erfaßt werden.

An die Vermessung und die Analyse der jeweils vorliegenden, real hergestellten Fläche schließt sich eine Anpassung einer theoretischen Fläche an die Meßwerte an. Unter Berücksichtigung der Meßergebnisse der Basisfläche erfolgt die individuelle Berechnung und Optimierung der bereitgestellten rezeptoptimierten Fläche auf die Daten des Brillenträgers. Im Falle einer punktuellen Vermessung ist es bevorzugt, wenn die rezeptoptimierte Fläche mittels Stützstellen berechnet wird, die mit den Meßpunkten zusammenfallen.

Das erfindungsgemäße gestellte Brillenglas hat nun, unabhängig von der Qualität der Basisfläche immer beste Abbildungseigenschaften, da die Fertigungsfehler der Basisfläche in der Berechnung der rezeptoptimierten Fläche berücksichtigt und so kompensiert werden.

Da die Basisfläche in der Regel ein möglichst günstiges Halbfertigprodukt sein soll, können somit die Qualitätsansprüche an die Basisfläche erheblich sinken. Dadurch erhält man einen deutlichen Preisvorteil bei einer besseren Qualität des gesamten Brillenglases. Es ist aber nicht notwendig, dass die Basisfläche ein Halbfertigprodukt ist, sie muß nur auf jeden Fall vor der Berechnung der rezeptoptimierten Fläche vermessen werden.

Notwendig für das Verfahren nach der Erfindung ist ein schnelles Meßverfahren und ein schnelles Berechnungs- und Optimierungsverfahren für die rezeptoptimierte Fläche. Auf modernen Rechnern kann die Optimierung der rezeptoptimierten Fläche in weniger als einer Minute erfolgen.

Meßverfahren, die bei dem erfindungsgemäßen Verfahren eingesetzt werden können, sind praktisch alle bekannten Verfahren, die sich zur Vermessung von Flächen von Brillengläser eignen. Verschiedene verwendbare Verfahren sind beispielsweise in den Übersichtsartikeln "Der Einsatz moderner Meßmethoden zur Entwicklung und Fertigung von Brillengläsern" von Dr. Wolfgang Grimm, erschienen in DOZ, Dezember 1984, S. 41 folgende oder in "Meßtechnische Gesichtspunkte zu optisch anspruchsvollen Brillengläsern" Dr. Günther Guilino, erschienen in DOZ, 12/88, S 8 ff beschrieben. Ferner ist ein für das erfindungsgemäße Berechnungsverfahren hervorragend geeignetes Verfahren die Vermessung der Basisfläche mit einem Reflexionsmeßverfahren. Auch interferometrische Verfahren sind gut geeignet, da sie die Abweichungen der IST-Fläche von der theoretischen SOLL-Fläche präzise erfassen.

Neben der allgemeinen Verbesserung der Abbildungsqualität und Reduzierung der Herstellungskosten ergeben sich noch weitere Vorteile des erfindungsgemäßen Verfahrens:

Bei kleinen verordneten Zylindern machen sich kleine Fehler in den Bezugspunkten der Basisfläche sehr stark bemerkbar. Wie nachstehend noch beschrieben, kann man mit der Kreuzzylindermethode aus dem Zylinder der Basisfläche und dem Sollzylinder der rezeptoptimierten Fläche eine Abschätzung für den resultierenden Zylinder erhalten. Dabei erkennt man, dass schon kleine astigmatische Fehler zu größeren Drehungen der Achslage führen.

Durch Berücksichtigung dieses in der Augenoptik bekannten Fehlers bei der Berechnung der rezeptoptimierten Fläche kann man nun diese Achsdreher vermeiden.

## Kurze Beschreibung der Zeichnung

Die Erfindung wird nachstehend ohne Beschränkung des allgemeinen Erfindungsgedankens unter Bezugnahme auf die Zeichnungen exemplarisch beschrieben, auf die im übrigen hinsichtlich der Offenbarung aller im Text nicht näher erläuterten erfindungsgemäßen Einzelheiten ausdrücklich verwiesen wird. Es zeigen:

Fig. 1    die Isolinien des Visus für eine theoretische Basis Fläche und eine entsprechende progressiv-atorische Fläche,

Fig. 2    die Isolinien, wenn die Basisfläche eine gefertigte sphärische Fläche mit Abweichungen an der Toleranzgrenze ist, und die rezeptoptimierte Fläche gemäß Fig. 1 verwendet wird,

Fig. 3    die Isolinien, wenn die Basisfläche gemäß Fig. 2 und eine für diese Basisfläche berechnete rezeptoptimierte Fläche eingesetzt werden.

**Beschreibung eines Ausführungsbeispiels**

Im folgenden sollen zunächst die verschiedenen Kreuzzylindermethoden zur Erläuterung der Auswirkungen kleiner Fehler beim Flächenastigmatismus beschrieben werden:

Kreuzzylindermethode-Addition

$$zyl_x = zyl_1 \cdot \cos(2 \cdot A_1) + zyl_2 \cdot \cos(2 \cdot A_2)$$

$$zyl_y = zyl_1 \cdot \sin(2 \cdot A_1) + zyl_2 \cdot \sin(2 \cdot A_2)$$

$$zyl_{res} = \sqrt{zyl_x^2 + zyl_y^2}$$

$$A_{res} = \operatorname{atan}(\frac{zyl_y}{zyl_x})$$

Mit

| | |
|---|---|
| $zyl_1$, $A_1$ Zylinder1: | Betrag und Achslage |
| $zyl_2$, $A_2$ Zylinder2: | Betrag und Achslage |
| $zyl_{res}$, $A_{res}$ Resultierender Zylinder: | Betrag und Achslage |

Es ist somit möglich, die Abweichungen in den Bezugspunkten für z.B. sphärische, zylindrische, prismatische Wirkungen bei der Berechnung der rezeptoptimierten Fläche direkt vorzugeben.

Weiterhin ist es möglich, einen Fehler im Ort der Gravur zu berücksichtigen. Die Halbfertigprodukte erhalten oftmals eine Gravur, aufgrund dessen die fertigen Brillengläser gestempelt und dann vom Augenoptiker nach diesen Stempeln in die Brillenfassung eingepaßt werden. Eine Verschiebung dieser Gravuren wirkt sich somit direkt auf den Tragekomfort des Brillenträgers aus. Mit dem erfindungsgemäßen Verfahren ist es nun möglich, diesen Fehler zu kompensieren.

Die Qualität des Brillenglases wird gekennzeichnet durch die sphärische und astigmatische Abweichung. Die Abweichung vom vorgegebenen Astigmatismus $A_0(y)$ berechnet man dabei am besten mit der Kreuzzylindermethode, die sowohl den Betrag als auch die Achslage berücksichtigt.

Kreuzzylindermethode-Substraktion

$$zyl_x = zyl_{ist} \cdot \cos(2 \cdot A_{ist}) - zyl_{soll} \cdot \cos(2 \cdot A_{soll})$$

$$zyl_y = zyl_{ist} \cdot \sin(2 \cdot A_{ist}) - zyl_{soll} \cdot \sin(2 \cdot A_{soll})$$

$$zyl_{res} = \sqrt{zyl_x^2 + zyl_y^2}$$

$$A_{res} = atan(\frac{zyl_y}{zyl_x})$$

mit:

zyl$_{ist}$, A$_{ist}$      Ist-Zylinder (Brillenglas): Betrag und Achslage
zyl$_{soll}$, A$_{soll}$      Soll-Zylinder (Verordnung): Betrag und Achslage
zyl$_{res}$, A$_{res}$      Resultierender Zylinder (Astigmatischer Fehler): Betrag und Achslage

Die Kreuzzylindermethode Subtraktion wird anhand des Beispiels 1 näher erläutert.

**Beispiel 1**

Die Verordnung hat eine sphärische Wirkung von 0,5 dpt im Fernbezugspunkt, eine Zylinderwirkung von 2,5 dpt und eine Achslage von 0 Grad sowie eine Addition von 2,0 dpt. Das berechnete Brillenglas hat an einem Punkt auf der Hauptlinie eine Zylinderwirkung von 2,5 dpt und eine Achslage von 2 Grad an einem Punkt auf der Hauptlinie. Hieraus resultiert ein astigmatischer Fehler von 0,174 dpt.

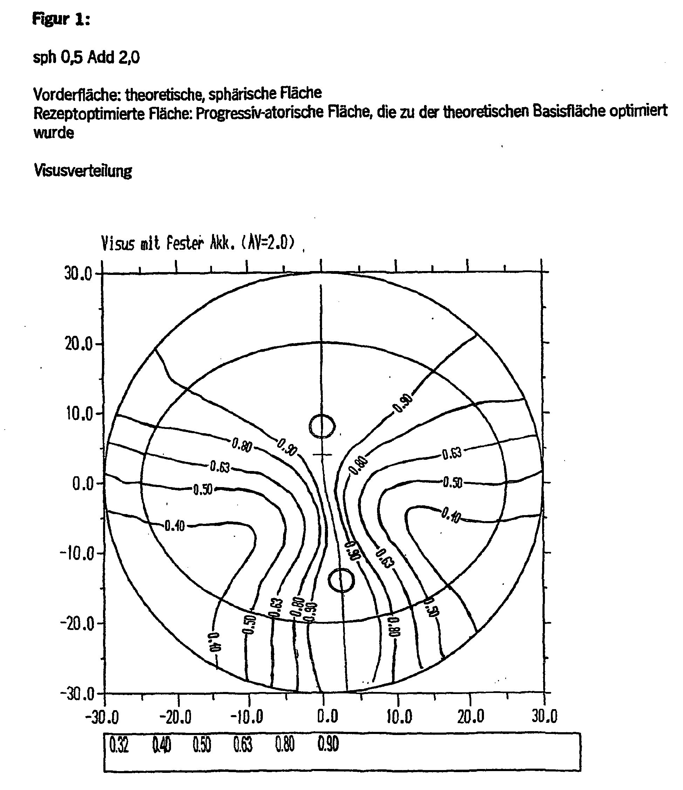

Im folgenden soll die Erfindung anhand der Figuren 1 bis 3 näher beschrieben werden:

Fig. 1 zeigt den Fall, dass eine progressiv-atorische Fläche für eine theoretische Basisfläche, in diesem Falle eine Sphäre ohne Fehler optimiert wird. Bei dem gezeigten Beispiel hat die Basisfläche, bei der sich um die Vorderfläche handelt, eine Wirkung im Scheitel von 5,12 dpt.

Im Fernbezugspunkt, der durch einen Kreis bei y = 8 mm in Fig. 1 dargestellt ist, beträgt die sphärische Wirkung des Brillenglases 0,5 dpt. Die Addition, d.h. die Differenz der optischen Wirkungen im Fernbezugspunkt und im Nahbezugspunkt (Kreis bei y ≈ -14 mm) beträgt 2 dpt. Die Hauptlinie verläuft zumindest zwischen Fernbezugspunkt und Nahbezugspunkt gewunden zur Nase hin.

In Fig. 1 sind für ein rohrundes Brillenglas mit einem Radius von 30 mm und ein typisches gerandetes Brillenglas die Isolinien des Visus - ohne Akkomodation des Brillenträgers - dargestellt, wobei ein Visus von 1 der "Normalfall" für ein rechtsichtiges Auge bzw. ein "korrigiertes" Auge ist. Deutlich ist zu sehen, dass der Fernteil vergleichsweise groß ist, und dass die Visus-Linie 0,9 vergleichsweise tief in die Peripherie des Fernteils verläuft.

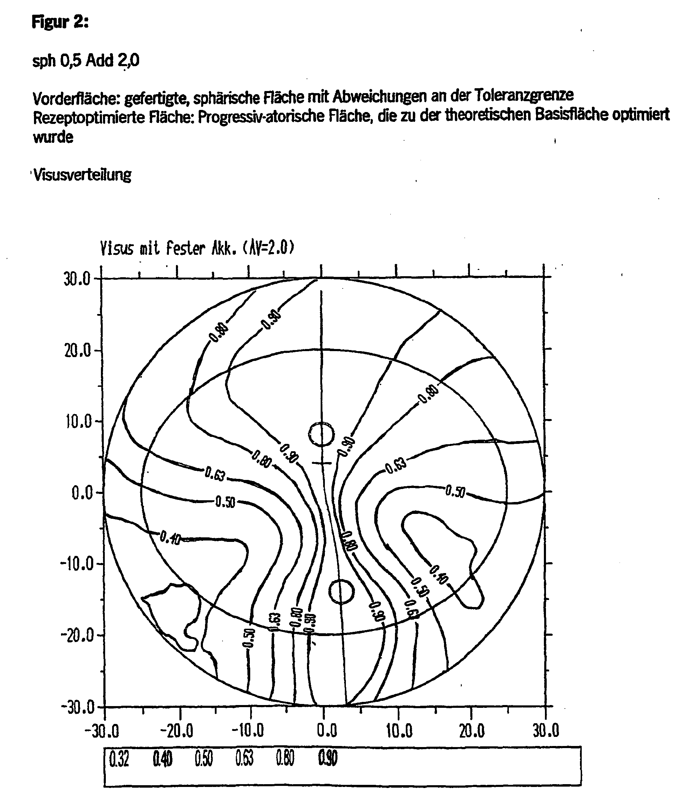

Fig. 2 zeigt den Fall, dass die Vorderfläche nicht eine theoretische, fehlerfreie sphärische Fläche, sondern eine tatsächlich gefertigte sphärische Fläche mit Fehlern ist. Die Abweichungen der gemäß Fig. 2 verwendeten sphärischen Fläche sind geringfügig größer als in ISO 10322 spezifiziert und entsprechen den typischen Abweichungen von sphärischen Flächen, wie sie von Drittanbietern für die Fertigung von Rezeptgläsern kostengünstig angeboten werden. Als rezeptoptimierte Fläche wird die bei dem Beispiel gemäß Fig. 1 verwendete progressiv-atorische Fläche verwendet, die für die theoretische Basisfläche berechnet bzw. optimiert worden ist.

Deutlich ist es sehen, dass die Isolinie des Visus 0,9 im Fernteil nicht mehr so tief wie in Fig. 1 verläuft, sondern höher in den Fernteil "hineinragt".

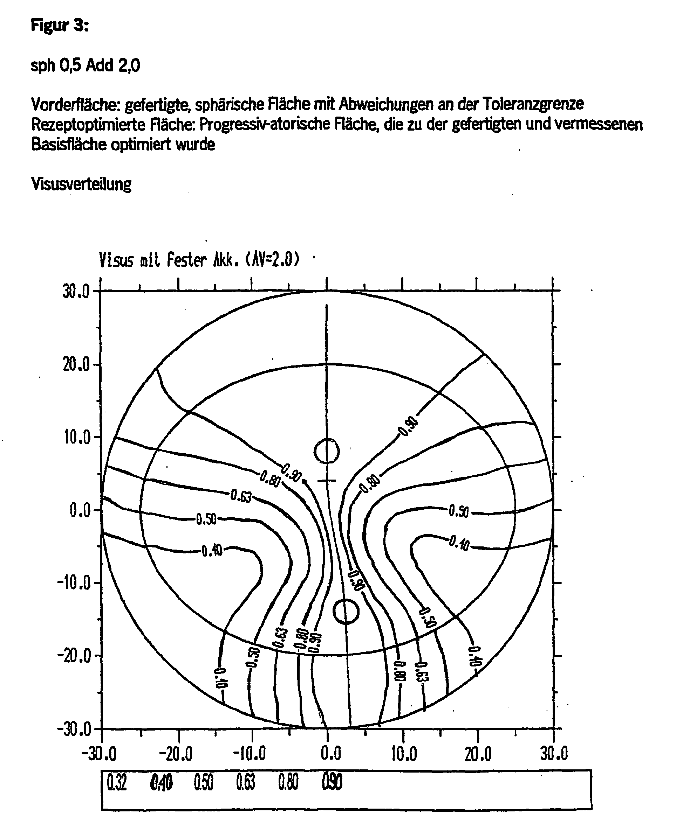

Fig. 3 zeigt ein erfindungsgemäßes Ausführungsbeispiel, bei dem die Basisfläche die gefertigte sphärische Fläche mit Abweichungen an der Toleranzgrenze gemäß Fig. 2 ist. Die rezeptoptimierte Fläche ist wiederum eine progressiv-atorische Fläche, die jedoch für die tatsächlich verwendete und vor der Optimierung vermessende Basisfläche eigens optimiert worden ist. Die Isolinien des Visus verlaufen genau sowie bei dem "Idealfall" gemäß Fig. 1, insbesondere verläuft die Isolinie des Visus 0,9 genau so tief wie bei dem rein theoretischen Beispiel gemäß Fig. 1.

Überraschenderweise hat sich dabei herausgestellt, dass die Toleranzen einer gefertigten progressiv-atorischen Fläche, die für eine reale, fehlerbehaftete Basisfläche berechnet worden ist, keinen so großen Einfluß auf den Visus haben, wie die Toleranzen der Basisfläche. Damit erhält man in der Praxis ein gegenüber dem Stand der Technik wesentlich verbessertes Brillenglas durch die Abstimmung der progressiv-atorischen Fläche bzw. allgemein der rezeptoptimierten Fläche auf eine reale und vermessene Basisfläche. Diese Vorgehensweise ist dabei insbesondere dann, wenn eine ganzflächige und schnelle Vermessung der Basisfläche erfolgt, kostengünstiger als von vornherein die Basisfläche möglichst exakt zu fertigen. Zudem verhält sich eine Kombination aus vermessener Basisfläche und darauf abgestimmter rezeptoptimierter Fläche fehlertoleranter als eine Kombination aus möglichst exakt hergestellter Basis Fläche und theoretischer rezeptoptimierter Fläche.

Vorstehend ist die Erfindung anhand eines Ausführungsbeispiels ohne Beschränkung des allgemeinen, den vorliegenden Ansprüchen entnehmbaren Erfindungsgedankens beschrieben worden.

**Patentansprüche**

1. Verfahren zur Herstellung eines Brillenglases, bei dem zunächst ein einseitig fertiges, ungerandetes Brillenglas (im folgenden als Blank bezeichnet) hergestellt wird, d. h. ein Brillenglas mit lediglich einer fertiggestellten optischen Fläche (im folgenden als Basisfläche bezeichnet),

   - anschließend entsprechend den Daten eines Brillenglasrezepts eine rezeptoptimierte Fläche berechnet wird, und
   - dann die rezeptoptimierte Fläche entsprechend den berechneten Daten gefertigt wird,

   wobei es sich bei der Basisfläche um eine zumindest annähernd sphärische Fläche handelt;
   **dadurch gekennzeichnet, daß:**

   - nach der Herstellung des einseitig fertigen Brillenglases die Basisfläche mittels eines interferometrischen oder reflektiven Verfahrens vermessen wird;
   - aus den vermessenen Punkten der Basisfläche eine theoretische Fläche abgeleitet wird, welche zur Berechnung der rezeptoptimierten Fläche verwendet wird; und
   - die rezeptoptimierte Fläche nicht nur unter Berücksichtigung der individuellen Daten des Brillenrezepts, sondern auch unter Berücksichtigung der tatsächlichen Form der Basisfläche und unter Berücksichtigung eines örtlichen Fehlers aufgrund einer Verschiebung einer Gravur des Blanks berechnet und gefertigt wird, wobei aufgrund der Gravur das fertige Brillenglas stempelbar und von einem Augenoptiker in eine Brillenfassung einpaßbar ist.

2. Verfahren nach Anspruch 1, **dadurch gekennzeichnet, daß** die rezeptoptimierte Fläche unter Berücksichtigung der auf der ganzen Fläche vorliegenden Abweichungen der IST-Werte der Pfeilhöhen der Basisfläche von den theoretischen SOLL-Werten berechnet wird.

3. Verfahren nach Anspruch 1 oder 2, **dadurch gekennzeichnet, daß** die rezeptoptimierte Fläche nicht nur unter Berücksichtigung der grundlegenden optischen Daten des Brillenrezepts (sphärische Wirkung, Astigmatismus, Achslage des Astigmatismus), sondern auch unter Berücksichtigung der individuellen Daten (Pupillenabstand, Hornhaut/ Scheitel-Abstand, Vorneigung usw.) des Brillenträgers sowie gegebenenfalls der Form der Gläserringe der gewählten Fassung berechnet wird.

4. Verfahren nach Anspruch 3, **dadurch gekennzeichnet, daß** die rezeptoptimierte Fläche eine progressive Fläche ist, d. h. eine Fläche, deren Wirkung in Gebrauchsstellung sich zwischen wenigstens zwei Bereichen ändert.

5. Verfahren nach Anspruch 4, **dadurch gekennzeichnet, daß** die progressive Fläche auch eine eventuelle, gemäß dem individuellen Brillenrezept erforderliche astigmatische Wirkung aufbringt.

6. Verfahren nach Anspruch 3, **dadurch gekennzeichnet, daß** die rezeptoptimierte Fläche eine atorische Fläche ist.

7. Verfahren nach einem der Ansprüche 1 bis 6, **dadurch gekennzeichnet, daß** die Basisfläche eine rotationssymmetrische Fläche ist, deren Form aus ästhetischen Gründen zur Anpassung an die Form der Gläserringe einer Brillenfassung gewählt ist, und deren astigmatische Wirkung in der Regel nicht zur Kompensation eines eventuellen Astigmatismus des Auges dient.

8. Verfahren nach einem der Ansprüche 1 bis 7, **dadurch gekennzeichnet, daß** die Vermessung der Basisfläche ganzflächig erfolgt.

9. Verfahren nach einem der Ansprüche 1 bis 8, **dadurch gekennzeichnet, daß** die rezeptoptimierte Fläche mittels Stützstellen berechnet wird, die mit den Meßpunkten zusammenfallen.


**Claims**

1. Method for manufacturing a spectacle lens, in which an unedged spectacle lens finished on one side (hereafter referred to as blank) is firstly produced, i.e. a spectacle lens with only one finished optical surface (hereafter referred to as base surface),

• a prescription-optimised surface is then calculated in accordance with the data of a spectacle lens prescription, and
• the prescription-optimised surface is then produced in accordance with the calculated data,

wherein the base surface is an at least approximately spherical surface;
**characterised in that**

• after production of the spectacle lens finished on one side, the base surface is measured by means of an interferometric or reflective method;
• a theoretical surface used to calculate the prescription-optimised surface is determined from the measured points of the base surface; and
• the prescription-optimised surface is calculated and produced not only taking into consideration the individual data of the spectacle prescription, but also taking into consideration the actual shape of the base surface and taking into consideration a local error as a result of a displacement of an engraving of the blank, wherein as a result of the engraving the finished spectacle lens can be stamped and fitted into a spectacle frame by an ophthalmic optician.

**2.** Method according to claim 1, **characterised in that** the prescription-optimised surface is calculated taking into consideration the deviations of the actual values of the sagittae of the base surface present on the whole surface from the theoretical nominal values.

**3.** Method according to claim 1 or 2, **characterised in that** the prescription-optimised surface is calculated not only taking into consideration the fundamental optical data of the spectacle prescription (spherical effect, astigmatism, axial position of the astigmatism), but also taking into consideration the individual data (pupil distance, cornea/vertex distance, forward inclination etc.) of the spectacle wearer and also, if necessary, the shape of the lens rings of the selected frame.

**4.** Method according to claim 3, **characterised in that** the prescription-optimised surface is a progressive surface, i.e. a surface having an effect, which changes between at least two regions in the position of use.

**5.** Method according to claim 4, **characterised in that** the progressive surface also generates a possible astigmatic effect necessary in accordance with the individual spectacle prescription.

**6.** Method according to claim 3, **characterised in that** the prescription-optimised surface is an atoric surface.

**7.** Method according to one of claims 1 to 6, **characterised in that** the base surface is a rotationally symmetric surface, the shape of which is selected for aesthetic reasons to adapt to the shape of the lens rings of a spectacle frame, and the astigmatic effect of which generally does not serve to compensate a possible astigmatism of the eye.

**8.** Method according to one of claims 1 to 7, **characterised in that** the measurement of the base surface is conducted over the entire surface.

**9.** Method according to one of claims 1 to 8, **characterised in that** the prescription-optimised surface is calculated by means of support points, which coincide with the measuring points.

**Revendications**

**1.** Procédé de fabrication d'un verre de lunettes, dans le cadre duquel est fabriqué tout d'abord un verre de lunettes sans rebord semi-fini (désigné ci-après ébauche), c'est-à-dire un verre de lunettes avec une seule surface optique achevée (désignée ci-après surface de base),

- ensuite en fonction des données d'une prescription de verre de lunettes, une surface optimisée sur prescription est calculée, et
- alors la surface optimisée sur prescription est fabriquée selon les données calculées, s'agissant dans le cadre de la surface de base d'une surface au moins approximativement sphérique ;

**caractérisé en ce que**

- après la fabrication du verre de lunettes semi-fini, la surface de base est mesurée au moyen d'un procédé interférométrique ou réflecteur ;
- une surface théorique est déduite des points mesurés de la surface de base, cette surface théorique étant utilisée pour calculer la surface optimisée sur prescription ; et
- la surface optimisée sur prescription est calculée et produite non seulement en tenant compte des données individuelles de la prescription du verre de lunettes, mais aussi en tenant compte de la forme effective de la surface de base et en tenant compte d'un défaut local dû à un déplacement d'une gravure de l'ébauche, le verre de lunettes fini pouvant être estampillé et redressé par un lunetier dans une monture de lunettes du fait de la gravure.

2. Procédé selon la revendication 1, **caractérisé en ce que** la surface optimisée sur prescription est calculée en tenant compte des écarts, présents sur toute la surface, entre les valeurs réelles des flèches de la surface de base et les valeurs théoriques.

3. Procédé selon les revendications 1 ou 2, **caractérisé en ce que** la surface optimisée sur prescription est calculée non seulement en tenant compte des données optiques de base de la prescription du verre de lunettes (effet sphérique, astigmatisme, position axiale de l'astigmatisme), mais également en tenant compte des données individuelles (distance pupillaire, distance cornée/foyer, incidence préalable, etc.) du porteur de lunettes, et éventuellement de la forme des contours de verre de la monture choisie.

4. Procédé selon la revendication 3, **caractérisé en ce que** la surface optimisée sur prescription est une surface progressive, c'est-à-dire une surface dont l'effet se modifie dans la position d'utilisation entre au moins deux zones.

5. Procédé selon la revendication 4, **caractérisé en ce que** la surface progressive exerce un éventuel effet astigmatique nécessaire selon la prescription de verre de lunettes individuelle.

6. Procédé selon la revendication 3, **caractérisé en ce que** la surface optimisée sur prescription est une surface atorique.

7. Procédé selon l'une quelconque des revendications 1 à 6, **caractérisé en ce que** la surface de base est une surface symétrique en rotation dont la forme est sélectionnée pour des raisons esthétiques pour s'adapter à la forme des contours de verre d'une monture de lunettes, et dont l'effet astigmatique ne sert généralement pas à la compensation d'un éventuel astigmatisme de l'oeil.

8. Procédé selon l'une quelconque des revendications 1 à 7, **caractérisé en ce que** la mesure de la surface de base est effectuée sur toute la surface.

9. Procédé selon l'une quelconque des revendications 1 à 8, **caractérisé en ce que** la surface optimisée sur prescription est calculée au moyen de points d'appui qui coïncident avec les points de mesure.

**Figur 1:**

sph 0,5 Add 2,0

Vorderfläche: theoretische, sphärische Fläche
Rezeptoptimierte Fläche: Progressiv-atorische Fläche, die zu der theoretischen Basisfläche optimiert
wurde

Visusverteilung

Visus mit fester Akk. (AV=2.0)

## Figur 2:

sph 0,5 Add 2,0

Vorderfläche: gefertigte, sphärische Fläche mit Abweichungen an der Toleranzgrenze
Rezeptoptimierte Fläche: Progressiv-atorische Fläche, die zu der theoretischen Basisfläche optimiert wurde

Visusverteilung

Visus mit fester Akk. (AV=2.0)

| 0.32 | 0.40 | 0.50 | 0.63 | 0.80 | 0.90 |

**Figur 3:**

sph 0,5 Add 2,0

Vorderfläche: gefertigte, sphärische Fläche mit Abweichungen an der Toleranzgrenze
Rezeptoptimierte Fläche: Progressiv-atorische Fläche, die zu der gefertigten und vermessenen
Basisfläche optimiert wurde

Visusverteilung

Visus mit fester Akk. (AV=2.0)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4210008 A1
- DE 19511613 A1
- US 2878721 A
- DE 4337369 A1

- DE 19701312 A1
- US PS4980993 A
- EP 0359084 A
- JP 10175149 A